Europäisches Patentamt

European Patent Office

Office européen des brevets

(11) Publication number : **0 499 564 A2**

## (12) EUROPEAN PATENT APPLICATION

(21) Application number : 92480005.5

(22) Date of filing : 14.01.92

(51) Int. Cl.⁵ : **G06F 1/26**

(30) Priority : **13.02.91 US 655572**

(43) Date of publication of application :
**19.08.92 Bulletin 92/34**

(84) Designated Contracting States :
**DE FR GB**

(71) Applicant : **International Business Machines
Corporation
Old Orchard Road
Armonk, N.Y. 10504 (US)**

(72) Inventor : **Ackman, Terry Dwayne
4109 Villa Road, N.W.
Rochester, MN 55901 (US)**

Inventor : **Budnik, Carol Sue
471 Carlisle Lane, N.W.
Rochester, MN 55901 (US)**
Inventor : **Ender, Tami Lu
4313 N.W. Manorview Drive
Rochester, MN 55901 (US)**
Inventor : **Massaro, Timothy John
1706 Terrace Lane, N.E.
Rochester, MN 55906 (US)**
Inventor : **Schmidt, Dennis James
1880 49 Th Street, N.W.
Rochester, MN 55901 (US)**

(74) Representative : **Vekemans, André
Compagnie IBM France Département de
Propriété Intellectuelle
F-06610 La Gaude (FR)**

(54) Method and apparatus for automatic power removal in a data processing system.

(57) A method and apparatus for automatically controlling the removal of electrical power from a data processing system in order to avoid the uncontrolled termination of operations within the system. Scheduled system on and off times are stored within memory (84) within the data processing system. At a predetermined time prior to each scheduled power off time (86), warning messages are automatically transmitted to all users within the system (88). Each user may then request the deferral or cancellation of a selected power off (92). In the absence of a cancellation request and after any requested deferral period (96) the system will automatically initiate and conclude termination operations such as "clean up" (100) or "back up" (104) operations. Thereafter, a determination is made to ensure that a scheduled system on time will not occur within a predetermined period following an attempted removal of electrical power (108) in order to ensure that sufficient time is available for a complete power down sequence. In one embodiment of the present invention, an additional user specified power off program may be selected to ensure that additional conditions are met prior to permitting power removal.

Fig. 4

EP 0 499 564 A2

The present invention relates in general to power management systems for data processing systems and in particular to power management systems which permit the automated removal of electrical power from a data processing system. Still more particularly, the present invention relates to a method and apparatus which permits the automatic removal of electrical power from a data processing system only after a predetermined number of conditions haves been met.

Modern complex computer systems are normally powered off by the issuance of a selected command. Typically, a system operator must initiate the power off sequence by entering such a command and in the event of heavy system loads must be present until all work has been completed. As a result, many entities find it simpler and less expensive to leave a data processing system powered on at all times rather than employ an operator to manually remove power from the system.

Many modern computer systems, such as the AS/400 mid-range computer, manufactured by International Business Machines Corporation of Armonk, New York., utilize a power down system command which includes a controlled option which attempts to defer the removal of electrical power until all applications which are running have been completed. Additionally, many modern computer products include job schedulers which permit an operator to initiate any command a a selected future time. Thus, by utilizing such a job scheduler a system operator many program the system so that the power down system command will run at a predetermined time.

Problems may exist with such systems in that the controlled option of a power down system command may result in a complete failure to remove electrical power from a data processing system. If the controlled option has been selected power removal will not occur until such time as all applications which are active within the system are completed. Certain software applications which do not check for the occurrence of a controlled power off, or which utilize a Receive Message CL command will never terminate and as a result an abnormal condition may exist. Further, in a non-controlled option mode of operation a power down system command can result in the system being abnormally terminated, resulting in uncompleted transactions and wasted time restoring applications within the system to a proper state.

One attempt at implementing the automatic removal of electrical power from a computer system utilizing a job scheduler approach is described in Japanese PUPA 01-9512, entitled "Automatic operation Control System For Computer Systems" and assigned to Mitsubishi Electric Corporation. The system described therein includes a calendar file which is stored within the computer system and which includes power on and power off information which have been set according to an operation schedule for the computer system. Power is then automatically coupled to and removed from the computer system without the necessity of operator input.

It should therefore be apparent that a need exists for a method which may be utilized to automatically control the electrical power application and removal to a data processing system which recognizes that this action may not be accomplished in accordance with a strict schedule. A system is required which allows certain flexibility such that the operator can ensure that selected conditions have been met prior to removing power from the data processing system such that the termination of selected active applications within the system does not occur and that termination operations such as clean up or back up are completed prior to removing electrical power.

It is therefore one object of the present invention to provide an improved power management system for data processing systems.

It is another object of the present invention to provide an improved power management system for a data processing system which permits the automatic removal of electrical power from a data processing system.

It is yet another object of the present invention to provide an improved method and apparatus which permits the automatic removal of electrical power from a data processing system only after a predetermined number of conditions have been met.

The foregoing objects are archived as is now described. The method and apparatus of the present invention permit the automatic control of the removal of electrical power from a data processing system in order to avoid the uncontrolled termination of operations within the system. Scheduled system on and off times are stored within memory within the data processing system. At a predetermined time prior to each scheduled power off time, warning messages are automatically transmitted to all users within the system. Each user may then request the deferral or cancellation of a selected power off. In the absence of a cancellation request and after any requested deferral period the system will automatically initiate and conclude termination operations such as "clean up" or "back up" operations. Thereafter, a determination is made to ensure that a scheduled system on time will not occur within a predetermined period following an attempted removal of electrical power in order to ensure that sufficient time is available for a complete power down sequence. In one embodiment of the present invention, an additional user specified power off program may be selected to ensure that additional conditions are met prior to permitting power removal.

The novel features believed characteristic of the invention are set forth in the appended claims. The invention itself however, as well as a preferred mode of use, further objects and advantages thereof, will best be understood by reference to the following detailed description of an illustrative embodiment when read in conjunction with the accompanying drawings, wherein :

Figure 1 is a pictorial representation of a data processing system which may be utilized to implement the present invention;

Figure 2 is a computer menu display depicting a plurality of scheduled system on an off times which may be stored within the data processing system of Figure 1;

Figure 3 is a computer menu display depicting the alteration of scheduled system on and off times for the data processing system of Figure 1; and

Figure 4 is a high level flow chart depicting the method of automated power removal in accordance with the present invention.

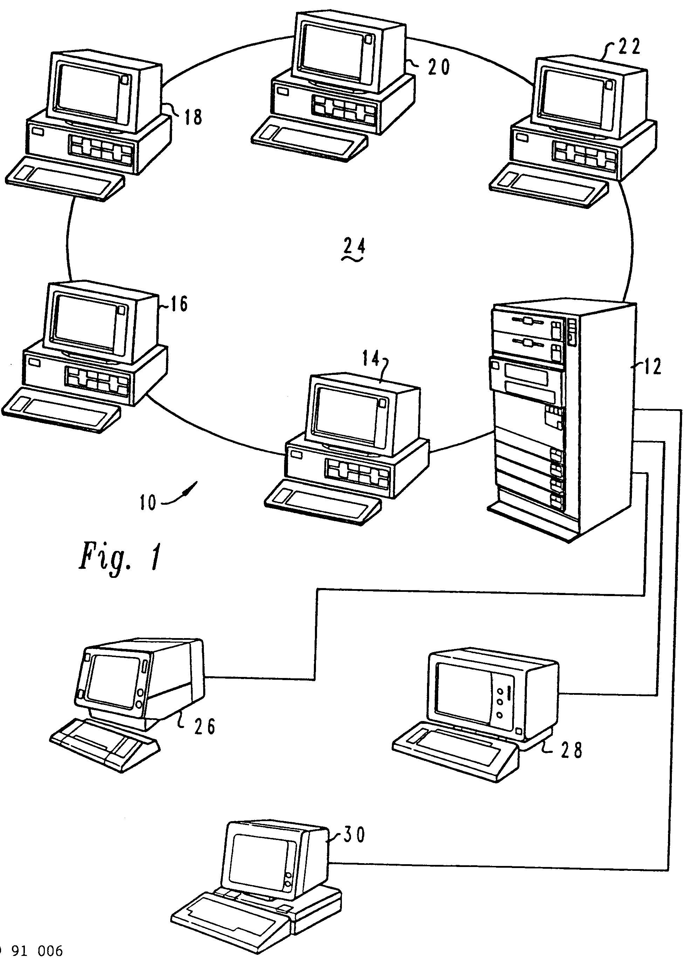

With reference now the figures and in particular with reference to Figure 1, there is depicted a pictorial representation of a data processing system 10 which may be utilized to implement the present invention. As illustrated, data processing system 10 preferably includes a midrange computer 12, such as the Model AS/400 mid-range computer manufactured by International Business Machines Corporation of Armonk, New York. Coupled to mid-range computer 12 are a plurality of personal computers 14, 16,18,20 and 22 which are coupled to mid-range computer 12 utilizing a token-ring network or Local Area Network (LAN) 24.

Also coupled to mid-range computer 12 are a plurality of additinal computer or terminals such as emulation adapter 26. Emulation adapter 26 may be implemented utilizing a Model 3279 Emulator Adapter, manufactured by International Business Machines Corporation of Armonk, New York. Similarly, display station 28 and ASCII terminal 30 may also be coupled to mid-range computer 12. Thus, in a manner set forth in Figure 1, data processing system 10 preferably includes at least one mid-range or mainframe computer with a plurality of personal computers, work stations or terminals attached thereto.

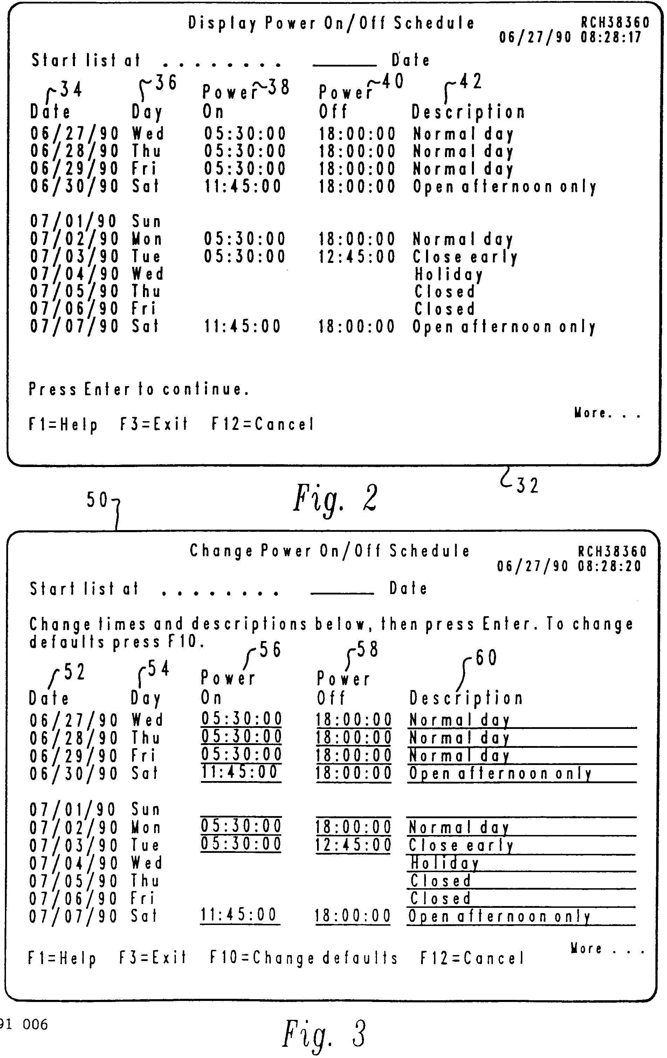

Referring now to Figure 2, there is depicted a computer menu display 32 which illustrates a plurality of scheduled system on and off times which may be stored within data processing system 10 of Figure 1.

As illustrated, computer menu display 32 preferably includes a plurality of columns which may be utilized to organize and display information regarding data processing system 10. In the depicted embodiment of the present invention, date column 34 may be utilized to list each date during which operation of data processing system 10 may occur. Additionally, day column 36 may be provided and utilized to indicate the day of the week associated with a date listed within date column 34 such that weekends and holidays may be accounted for during power on/power off scheduling. Next, certain of those entries within date column 34 and day column 36 includes an entry within power on column 38 and power off column 40. Thus, for each day wherein data processing system 10 will operate a number of power on/power off times may be stored. Additionally, description column 42 may be utilized to indicate, in narrative form, the purpose for which data processing system 10 was energized during the listed period.

Thus, those skilled in the art will appreciate that by providing a computer menu display, such as that depicted at computer menu display 32, the method and apparatus of the present invention permit the rapid and efficient access by individual users of a schedule indicating the operating hours for data processing system 10.

With reference now to Figure 3, there is depicted a computer menu display 50 which illustrates the method by which schedule systems on and off times may be altered for data processing system 10 by those processing sufficient authority to do so. As above, computer menu display 50 preferably includes a date column 52, day column 54, power on column 56, power off column 58 and description column 60. By utilizing computer menu display 50 of Figure 3, those skilled in the art will appreciate that scheduled power on and power off times stored within data processing system 10 may be altered to accommodate changes in operation or schedule in a simple and efficient manner.

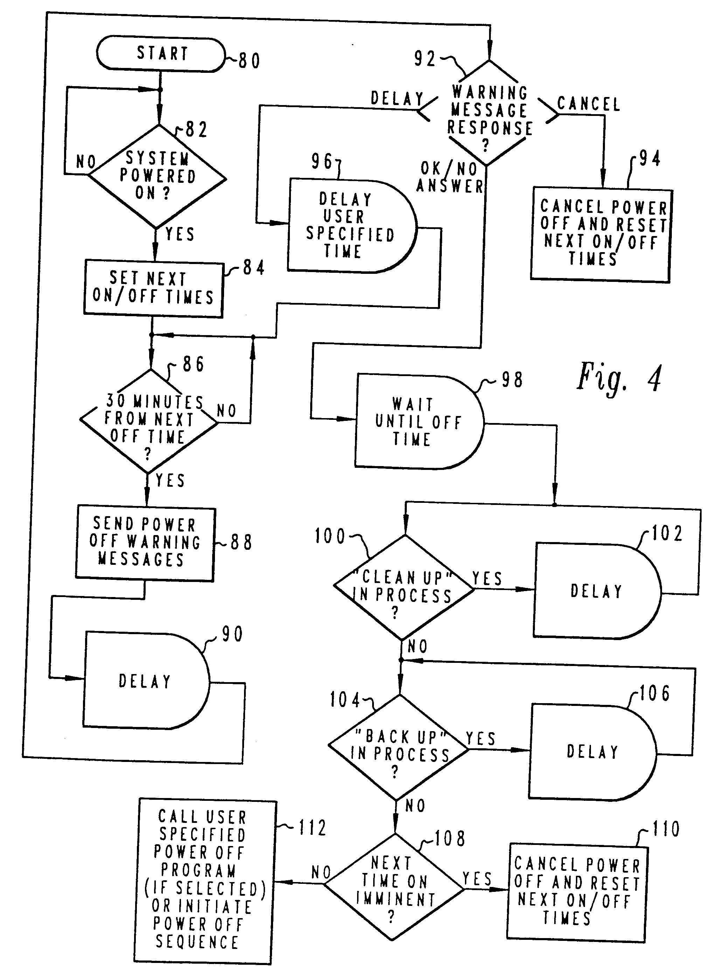

Finally, referring to Figure 4, there is depicted a high level flow chart which illustrates the method of automated power removal in accordance with the present invention. As illustrated, the process begins at block 80 and thereafter passes to block 82 which depicts a determination of whether or not data processing system 10 has been powered on. If not, the process merely iterates until such time as the system is powered on. After a determination that data processing system 10 has been powered on, as illustrated in block 82, block 84 depicts the setting of the next on/off times in the sequence of on/off times stored within data processing system 10, such as the stored times previously illustrated in Figure 2

Next, in accordance with an important feature of the present invention, block 86 illustrates a determination of whether or not the present time, obtained from a system clock in a manner well known in the art, is within thirty minutes of the next scheduled off time or any other preselected time interval. If not, as above, the system merely iterates until the appropriate time. However, once the determination illustrated in block 86 requires that the next scheduled off time will occur within the selected number of minutes the process passes to block 88. Block 88 illustrates the transmittal of power off warning messages to all users within data processing system 10. This is an important feature of the present invention at it allows those users currently enrolled within data processing system 10 to receive a warning prior to the power being removed from the system.

Thereafter, a delay occurs, as depicted in block 90 and the process then passes to block 92 which depicts a determination of whether or not a response has been received from any user within data processing system 10 to the power off warning messages which have been sent. In accordance with the illustrated embodiment of the present invention, a user within data processing system 10 may respond to a power off warning message in one of three manners. Firstly, a user with sufficient authority may elect to cancel a scheduled power off. In such event, the process passes to block 94 which illustrates the cancelling of a scheduled power off and the resetting of the next on/off times from the stored scheduled on and off times within data processing system 10. Thereafter, although not illustrated, the process will return to block 86 to once again await the appropriate time to issue a warning message to system users that a power of will occur.

Additionally, in response to a power off warning message automatically sent by data processing system 10, a user may request a specified amount of delay prior to a power off condition. This is illustrated in block 96 which depicts a delay or deferral for the user specified period of time. Thereafter, the process returns to block 86 and once again automatically transmits warning messages prior to the next scheduled off time. Of course, those skilled in the art will appreciate that a specified delay time of less than thirty minutes may be requested by a system user and in such case the determination within block 86 will result in an immediate power off warning message being transmitted to each user within data processing system 10, indicating how many minutes remain until a scheduled power off.

Finally, referring again to block 92, a user may expressly acknowledge or implicitly accept the power off warning message which has been sent or fail to respond entirely. Under such conditions, block 98 illustrates the delay of the system until the scheduled off time and thereafter proceeding with the remainder of the automated power removal process. This process initiates, as illustrated in block 100, with a determination of whether or not "clean up" operations are in process. By "clean up" operations, what is meant is memory management operations, such as deleting history log entries which are older than a selected date, closing of open files, or other similar housekeeping operations. If "clean up" operations are still in process, the system passes to block 102 and after a predetermined delay returns to block 100 for a further determination of the status of "clean up" operations.

After all "clean up" operations have concluded, as determined in block 100, the process passes to block 104. Block 104 illustrates a determination of whether or not "back up" operations are still in process. By " back up" operations, what is meant is the copying of all desired critical information into a "back up" nonvolatile storage unit, such as a tape drive. Those skilled in the art will appreciate that prior to terminating operation of data processing system 10 by the removal of electrical power it is common to require that critical data accumulated during a particular operating period be copied to nonvolatile storage to prevent the loss of such data in the event of a catastrophic failure of data processing system 10. Of course, it should be apparent that a termination of operation of data processing system 10 by the removal of electrical power prior to the completion of "back up" operations would have a a deleterious effect on the integrity of data processing system 10. As above, in the event "back up" operations are still in process, the system passes to block 106 which illustrates a predetermined amount of delay prior to once again determining whether or not "back up" operations are still proceeding.

Finally, after ensuring that all termination operations such as clean up operations and "back up" operations have been successfully concluded, block 108 illustrates another important feature of the present invention. Block 108 depicts a determination of whether or not the next scheduled on time for data processing system 10 is imminent or has been bypassed due to a delay requested by a user. By imminent what is meant is within a sufficiently short period of time such that all power off sequences may not have sufficient time to occur prior to an attempted restart of data processing system 10.

Of course, the amount of time required to complete a power down sequence will vary from data processing system to data processing system; however, an attempted restart of a data processing system during an incomplete power down sequence will result in abnormal operations and must be avoided, if possible. Therefore, in the event the next scheduled on time stored within data processing system 10 is imminent , the process passes to block 110, which illustrates the cancellation of the scheduled power off and the resetting of the next on/off times which are stored within data processing system 10. This may occur due to those delays in power down sequence which result from user or system required delays. As above, although not illustrated, the process would then iterate and return to block 86 wherein automatic power off warning messages will once again be transmitted to each user within data processing system 10 a selected period of time prior to the next scheduled off time.

Returning again to block 108, in the event the next schedule on time for data processing system 10 is not imminent, the process passes to block 112. Block 112 illustrates the calling of a user specified power off program, if selected, or the initiation of the power off sequence. In accordance with an important feature of the present invention, the method and apparatus described herein permits the additional utilization of a user specified power off program which allows a user with sufficient authority to specify selected conditions which must be met or which must occur prior to permitting a power down sequence within data processing system 10.

For example, a user may specify that selected programs which may be running unattended may or may not be allowed to continue, deferring a power down sequence until such time as those programs are complete. of course, in the event a user specified power off program is selected, it should be apparent that a power off sequence may not occur. That is, the power off sequence may be deferred or cancelled in the manner described in the process above. Alternately, the initiation of the power off sequence will occur in the event the user specified power off program has not been selected. Thereafter, the power off sequence will be initiated by the automatic issuance of an appropriate command, the method of the present invention having been utilized to ensure that all users within the system have been warned and that all termination operations have been successfully completed.

Thus, the method and apparatus of the present invention permit the automated removal of electrical power from a data processing system in an intelligent manner in that the power off sequence will only occur after warning all users and after assuring that all required termination operations have been successfully completed.

## Claims

1. A method in a data processing system for automatically removing electrical power from said data processing system, said method comprising the steps of
   storing within said data processing system scheduled on and off times for said data processing system;
   automatically transmitting warning messages to each user within said data processing system prior to each scheduled off time for said data processing system; and
   automatically removing electrical power from said data processing system at said scheduled off time in the absence of a response from a user to said warning messages.

2. The method in a data processing system for automatically removing electrical power from said data processing system according to Claim 1, further including the step of automatically deferring the removal of electrical power from said data processing system for a selected period of time in response to a deferral request from a user in response to said warning messages.

3. The method in a data processing system for automatically removing electrical power from said data processing system according to Claim 1, further including the step of cancelling the removal of electrical power from said data processing system in response to a cancellation request from a user in response to said warning messages.

4. The method in a data processing system for automatically removing electrical power from said data processing system according to Claim 2, further including the step of cancelling the removal of electrical power from said data processing system in response to the existence of a scheduled on time for said data processing system within a predetermined time following an attempted removal of electrical power from said data processing system.

5. The method in a data processing system for automatically removing electrical power from said data processing system according to Claim 2, further including the step of cancelling the removal of electrical power from said data processing system in response to a bypassing of a scheduled on time due to a deferral of the removal of electric power from said data processing system for a selected period of time.

6. The method in a data processing system for automatically removing electrical power from said data processing system according to Claim 1, wherein said step of automatically removing electrical power from said data processing system at said scheduled off time in the absence of a response from a user to said warning messages further includes the step of automatically initiating and concluding termination operations within said data processing system prior to removing electrical power from said data processiing system.

7. The method in a data processing system for automatically removing electrical power from said data processing system according to Claim 1, further including the step of deferring the removal of electrical power from said data processing system until the occurrence of at least one user specified event.

8. A power management system for use in a data processing system having a plurality of users enrolled therein, said power management system comprising:
   memory means for storing scheduled on and off times for said data processing systems;
   communication means for automatically transmitting warning messages to each user within said data processing system prior to each scheduled off time for said data processing system; and power control means for automatically removing electrical power from said data processing system at said scheduled off time in the absence of a response from a user to said warning messages.

9. A power management system for use in a data processing system having a plurality of users enrolled therein according to Claim 8, wherein said power control means further includes deferral control means for automatically deferring the removal of electrical power from said data processing system for a selected period of time in response to a deferral request from a user in response to said warning messages.

10. A power management system for use in a data processing system having a plurality of users enrolled therein according to Claim 8, wherein said power control means further includes means for cancelling the removal of electrical power from said data processing system in response to a cancellation request from a user in response to said warning messages.

11. A power management system for use in a data processing system having a plurality of users enrolled therein according to Claim 9, wherein said poser control means further includes means for cancelling the removal of electrical power form said data processing system in response to the existence of a scheduled on time within a predetermined time period following an attempted removal of electrical power from said data processing system.

Fig. 1

```
                    Display Power On/Off Schedule           RCH38360
                                                       06/27/90 08:28:17
    Start list at  . . . . . . . . .  _____ Date
      ┌34        ┌36    Power┌38   Power┌40      ┌42
    Date        Day    On         Off         Description
    06/27/90 Wed    05:30:00   18:00:00   Normal day
    06/28/90 Thu    05:30:00   18:00:00   Normal day
    06/29/90 Fri    05:30:00   18:00:00   Normal day
    06/30/90 Sat    11:45:00   18:00:00   Open afternoon only

    07/01/90 Sun
    07/02/90 Mon    05:30:00   18:00:00   Normal day
    07/03/90 Tue    05:30:00   12:45:00   Close early
    07/04/90 Wed                          Holiday
    07/05/90 Thu                          Closed
    07/06/90 Fri                          Closed
    07/07/90 Sat    11:45:00   18:00:00   Open afternoon only


    Press Enter to continue.

    F1=Help   F3=Exit   F12=Cancel                  More. . .
```

┌32

*Fig. 2*

50┐

```
                    Change Power On/Off Schedule           RCH38360
                                                       06/27/90 08:28:20
    Start list at  . . . . . . . .  _____ Date

    Change times and descriptions below, then press Enter. To change
    defaults press F10.
                          ┌56        ┌58            ┌60
      ┌52        ┌54    Power      Power
    Date        Day    On         Off         Description
    06/27/90 Wed    05:30:00   18:00:00   Normal day
    06/28/90 Thu    05:30:00   18:00:00   Normal day
    06/29/90 Fri    05:30:00   18:00:00   Normal day
    06/30/90 Sat    11:45:00   18:00:00   Open afternoon only

    07/01/90 Sun
    07/02/90 Mon    05:30:00   18:00:00   Normal day
    07/03/90 Tue    05:30:00   12:45:00   Close early
    07/04/90 Wed                          Holiday
    07/05/90 Thu                          Closed
    07/06/90 Fri                          Closed
    07/07/90 Sat    11:45:00   18:00:00   Open afternoon only

    F1=Help   F3=Exit   F10=Change defaults   F12=Cancel    More . . .
```

91 006

*Fig. 3*

*Fig. 4*